# EUROPEAN PATENT APPLICATION

(11) **EP 3 951 767 A1**
(43) Date of publication of application: **09.02.2022**
(21) Application number: 20778879.5
(22) Date of filing: 03.02.2020
(51) Int. Cl.: G09G 5/00, G09G 5/36, H04N 21/431, H04N 21/435, H04N 21/44

(54) **IMAGE PROCESSING DEVICE, IMAGE PROCESSING METHOD, AND DISPLAY DEVICE**

(30) Priority: 25.03.2019 JP 2019056050
(71) Applicant: Sony Group Corporation, Tokyo 108-0075 (JP)
(72) Inventor: KAMADA, Ko, Tokyo 108-0075 (JP); MISHIMA, Akifumi, Tokyo 108-0075 (JP)
(74) Representative: D Young & Co LLP
(86) International application number: PCT/JP2020/003883
(87) International publication number: WO 2020/195169

(57) **Abstract**

An image processing device includes: a subtitle information acquisition unit configured to acquire subtitle information; a subtitle processing unit configured to perform rendering of subtitles with a resolution of an entire image of a display panel on the basis of the subtitle information acquired by the subtitle information acquisition unit to generate a subtitle image of a corresponding area among a plurality of display areas divided in the display panel; a corresponding image generation unit configured to generate an image signal of the corresponding area; and a combination unit configured to combine the subtitle image generated by the subtitle processing unit with the image signal generated by the corresponding image generation unit to generate an image signal with subtitles.

## Description

### [Technical Field]

The present technology relates to an image processing device, an image processing method, and a display device, and particularly, to a technical field of a subtitle display in a case in which images for a plurality of display areas are supplied and an entire image is displayed.

### [Background Art]

A technology is known in which respective image signals in a state in which one image is divided into a plurality of areas are generated by a plurality of servers and supplied to a display panel, for example, so that a large screen display in which images are connected is performed.

Meanwhile, examples of a general subtitle display technology include a technology described in PTL 1 below.

### [Citation List]

### [Patent Literature]

[PTL 1]
WO 2017/130804

### [Summary]

### [Technical Problem]

Incidentally, when a subtitle display is considered in a case in which one image is displayed using a plurality of servers (players) as in a large tiling display, there is a concern that the quality of text constituting subtitles deteriorates.

For example, in a case in which it is assumed that four 4K (3840 pixels x 2160 pixels) images are arranged vertically and horizontally and an 8K (7680 pixels x 4320 pixels) image display is performed, and when subtitles superimposed on the image are enlarged according to a screen size, characters of the subtitles become images with conspicuous corners.

There is a demand for a subtitle display with characters which are as esthetically pleasing as far as possible in order for viewers to easily perceive the quality of characters in a large screen display.

Therefore, an object of the present technology is to improve the quality of a subtitle display.

### [Solution to Problem]

An image processing device according to the present technology includes: a subtitle information acquisition unit configured to acquire subtitle information; a subtitle processing unit configured to perform rendering of subtitles with a resolution of an entire image of a display panel on the basis of the subtitle information acquired by the subtitle information acquisition unit to generate a subtitle image of a corresponding area among a plurality of display areas divided in the display panel; a corresponding image generation unit configured to generate an image signal of the corresponding area; and a combination unit configured to combine the subtitle image generated by the subtitle processing unit with the image signal generated by the corresponding image generation unit to generate an image signal with subtitles.

In this case, it is assumed that the display panel is divided into, for example, a plurality of display areas, and a display based on an image signal from an image processing device (server) that is in charge of each area is performed in each area. For example, a display panel that performs a display of a large screen in which four display areas are arranged vertically and horizontally using four image processing devices is assumed.

The image processing device having the above configuration can be applied as an image processing device corresponding to one display area thereof.

In the image processing device according to the present technology described above, it is conceivable that the subtitle information acquisition unit acquire subtitle information common to the subtitle information acquisition units of the image processing devices that are in charge of the other display areas.

For example, when a system in which image signals are supplied to four display areas of the display panel by four image processing devices is assumed, the common subtitle information is supplied to the four image processing devices.

In the image processing device according to the present technology described above, it is conceivable that the subtitle information acquisition unit acquire a subtitle file including text data of a subtitle character string, subtitle position information, and font size information as the subtitle information, the subtitle file being a subtitle file with the same content as those for the subtitle information acquisition units of the image processing devices that are in charge of the other display areas.

That is, a common subtitle file with the same content of the text data of the subtitle character string, the subtitle position information, and the font information is supplied to the respective image processing devices.

In the image processing device according to the present technology described above, it is conceivable that the subtitle processing unit perform rendering of the subtitles using a storage area corresponding to the resolution of the entire image of the display panel and crop the corresponding area to generate a subtitle image. When a system that supplies image signals to, for example, four display areas of the display panel is assumed, a storage area corresponding to all of the four display areas is prepared and rendering is performed.

In the image processing device according to the present technology described above, it is conceivable that the subtitle processing unit determine a subtitle portion within the corresponding area and perform rendering of the subtitle portion with the resolution of the entire image to generate a subtitle image.

In a case in which a system in which an image processing device corresponding to each of the plurality of display areas of the display panel supplies an image signal is assumed, when each image processing device can determine a subtitle portion included in the display area of which the image processing device is in charge, the image processing device performs rendering of the subtitle portion to generate a subtitle image.

The subtitle portion within the corresponding area means a portion that is displayed within the corresponding area among the character strings constituting the subtitles and the like.

In the image processing device according to the present technology described above, it is conceivable that the subtitle processing unit perform rendering of an image size for the corresponding area using a subtitle start point at the resolution of the entire image of the display panel, a font size at the resolution of the entire image of the display panel, a subtitle start position within the corresponding area, and information on the subtitle portion within the corresponding area.

Disposition of each of characters constituting the entire subtitles can be determined from the subtitle start point and the font size at the resolution of the entire image. This makes it possible to determine the subtitle start position and the subtitle portion within the corresponding area.

In the image processing device according to the present technology described above, it is conceivable that the subtitle information acquisition unit acquire a subtitle file including font size information as the subtitle information, and also acquire information on the resolution of the entire image of the display panel, and the subtitle processing unit determine a font size of the subtitle according to the resolution of the entire image of the display panel using the information on the resolution of the entire image of the display panel and the information on the font size of the subtitle file.

That is, the font size of the subtitles corresponding to the resolution of the entire image is calculated.

In the image processing device according to the present technology described above, it is conceivable that the subtitle information acquisition unit acquire a subtitle file including text data of a subtitle character string, subtitle position information, and font size information as the subtitle information, and also acquire information on the resolution of the entire image of the display panel and information on the corresponding area, and the subtitle processing unit determine a subtitle start position according to the resolution of the entire image of the display panel and a subtitle start position in the corresponding area using the information on the resolution of the entire image of the display panel, the information on the corresponding area, and the subtitle position information of the subtitle file.

When the disposition of subtitles in the resolution of the entire image can be determined and its own corresponding area can be ascertained, the subtitle start position of the corresponding area can be calculated.

In the image processing device according to the present technology described above, it is conceivable that the subtitle processing unit obtain sizes of respective characters constituting the subtitles and perform rendering of the subtitle portion within the corresponding area from a subtitle start position in the corresponding area to generate a subtitle image.

Knowing the size of the characters and the subtitle start position makes it possible to perform subtitle rendering of the corresponding area.

In the image processing device according to the present technology described above, it is conceivable that the image processing device include an output unit configured to output an image signal with subtitles for the corresponding area generated by the combination unit to a display device including a display panel. That is, the image processing device supplies the image signal with subtitles obtained by combining the subtitles, which is the image signal with subtitles for its own corresponding portion, to the display device including the display panel so that the image with subtitles is displayed.

In the image processing device according to the present technology described above, it is conceivable that the corresponding image generation unit acquire an image signal with image content to be displayed on the entire display panel, crop an image of the corresponding area as a part thereof, and enlarge the image to generate an image signal with image content for the corresponding area.

That is, when an image signal with content to be displayed on the entire display panel is supplied, a part thereof is cropped and enlarged so that an image signal of its own corresponding area is generated.

In the image processing device according to the present technology described above, it is conceivable that the corresponding image generation unit acquire an image signal with image content of only the corresponding area in the image content displayed on the entire display panel and perform enlargement on the image signal to generate an image signal with the image content of the corresponding area.

That is, when the image signal of the corresponding area that is a part of the image signal with the content to be displayed on the entire display panel is supplied, enlargement is performed so that the image signal of its own corresponding area is generated.

An image processing method according to the present technology is an image processing method including: acquiring subtitle information; performing rendering of subtitles with the resolution of an entire image of a display panel on the basis of the acquired subtitle information to generate a subtitle image of a corresponding area among a plurality of display areas divided in the display panel; generating an image signal of the corresponding area; and combining the image signal of the corresponding area with the subtitle image of the corresponding area to generate an image signal with subtitles.

Accordingly, an image signal with subtitles obtained through combination with a subtitle image rendered at a resolution level of the display panel when one of the display areas of the display panel is set as the corresponding area is generated.

A display device according to the present technology includes a display panel divided into a plurality of display areas, an image signal with subtitles being supplied from a plurality of image processing devices each including one of the display areas assigned as a corresponding area to each display area so that an image display is performed. The image processing device in this case has the above-described configuration.

### [Brief Description of Drawings]

[Fig. 1]

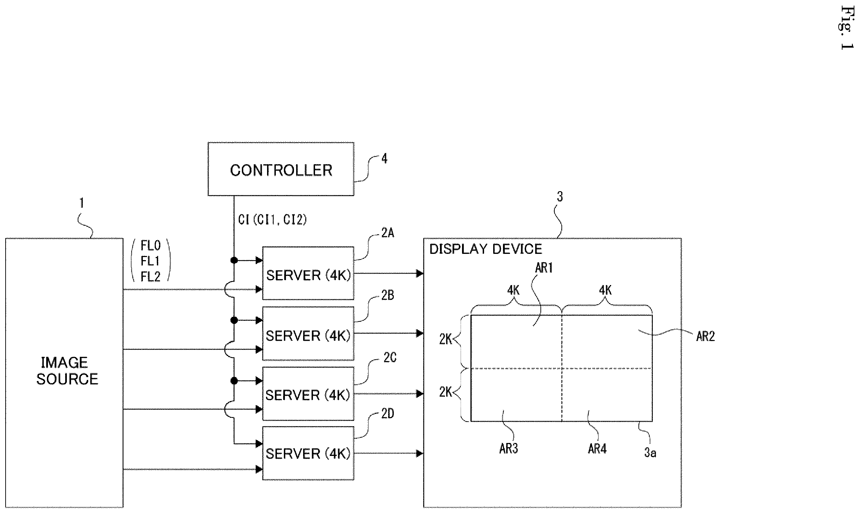

   Fig. 1 is a block diagram of a display system configuration according to an embodiment of the present technology.
[Fig. 2]

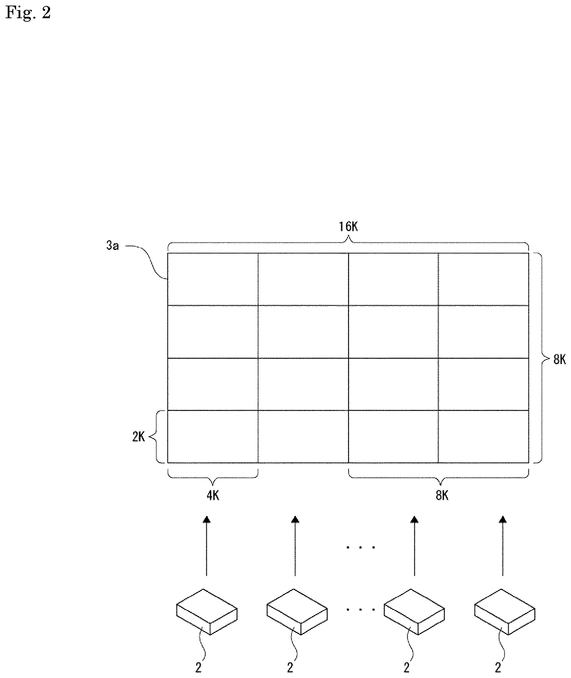

   Fig. 2 is an illustrative diagram of a display device and a plurality of servers assumed in the embodiment.
[Fig. 3]

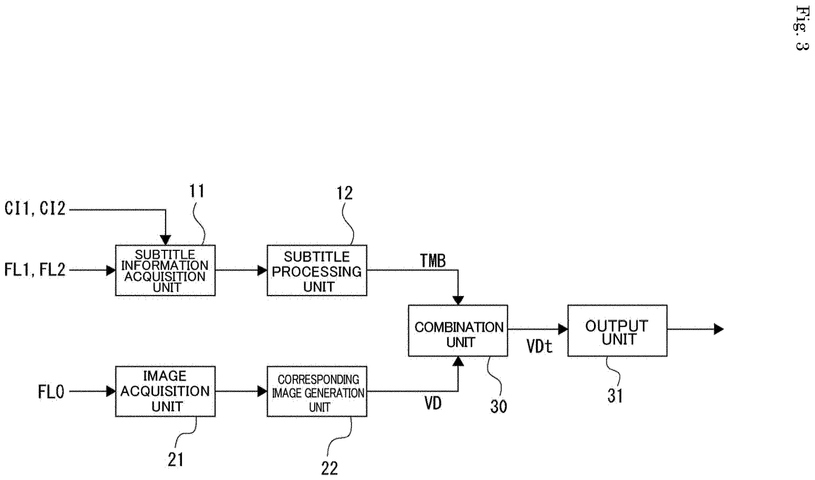

   Fig. 3 is a block diagram of the server of the embodiment.
[Fig. 4]

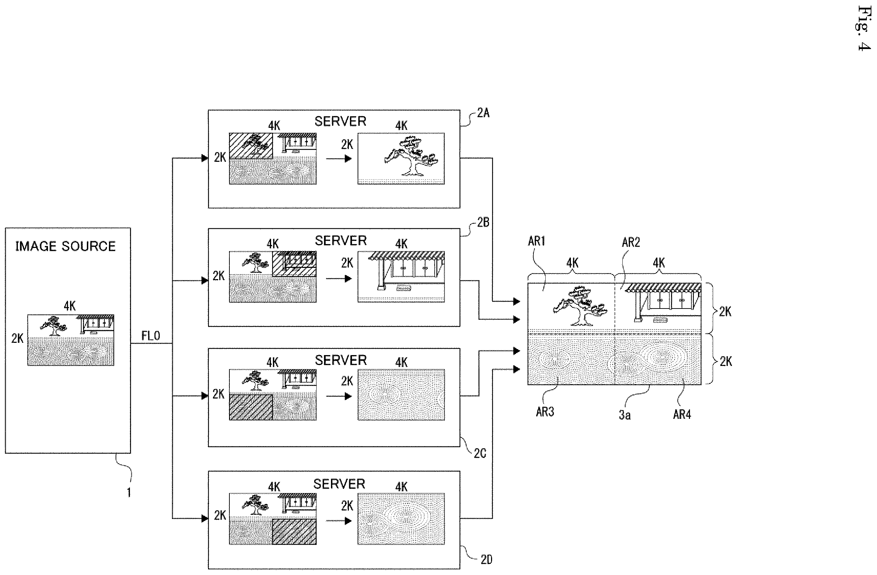

   Fig. 4 is an illustrative diagram of image signal generation in corresponding areas of the servers of the embodiment.
[Fig. 5]

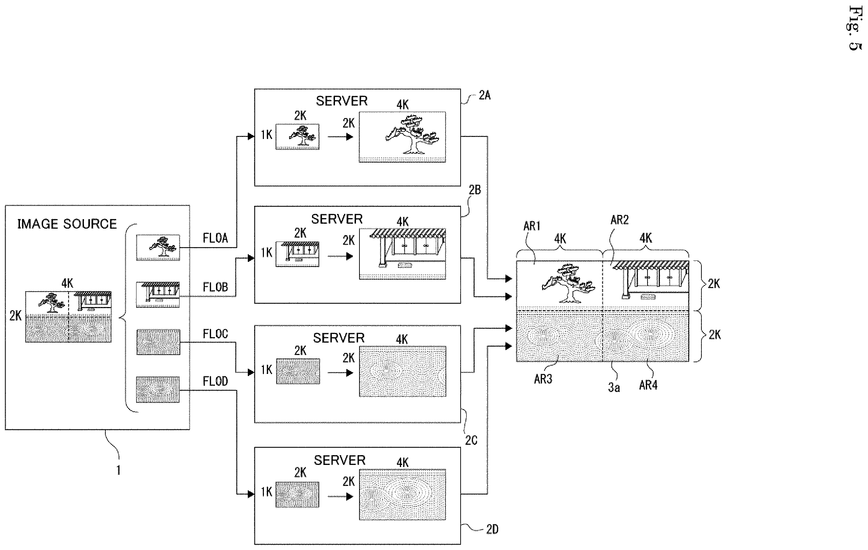

   Fig. 5 is an illustrative diagram of image signal generation in the corresponding areas of the servers of the embodiment.
[Fig. 6]

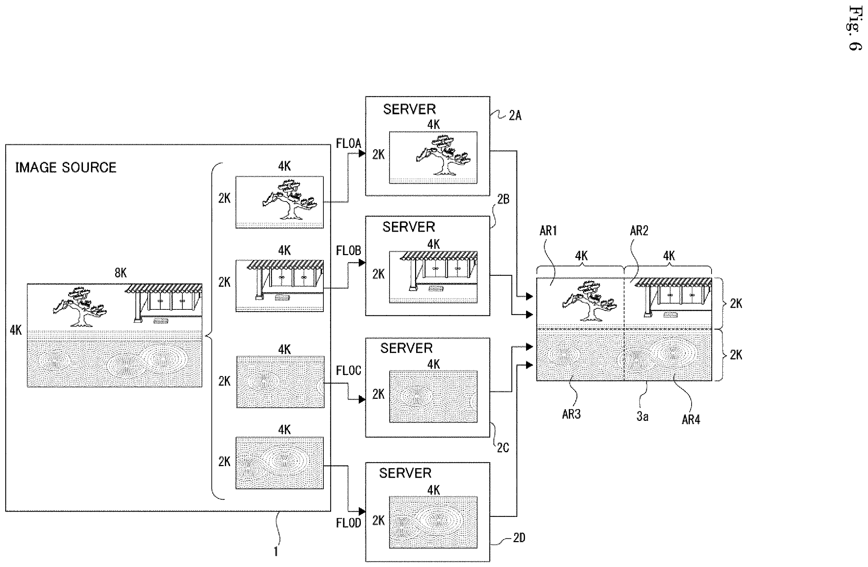

   Fig. 6 is an illustrative diagram of image signal generation in the corresponding areas of the servers of the embodiment.
[Fig. 7]

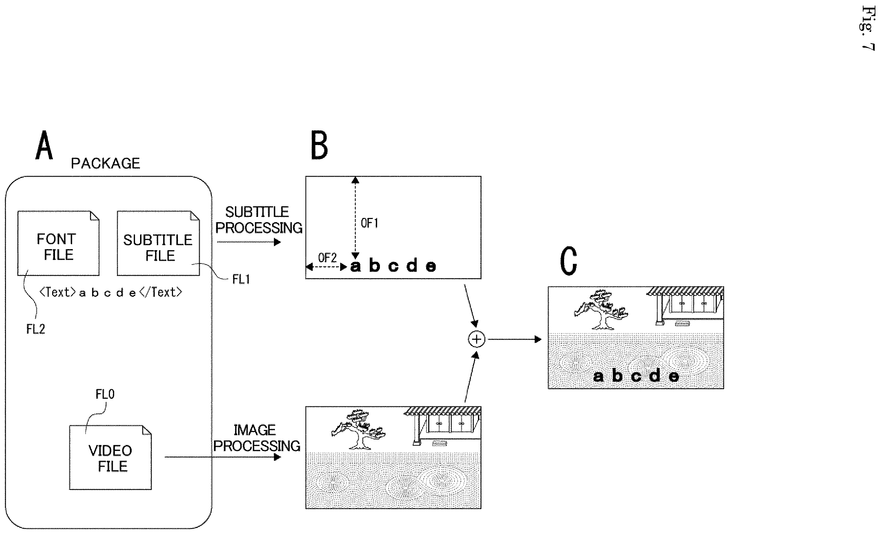

   Fig. 7 is an illustrative diagram of subtitle processing.
[Fig. 8]

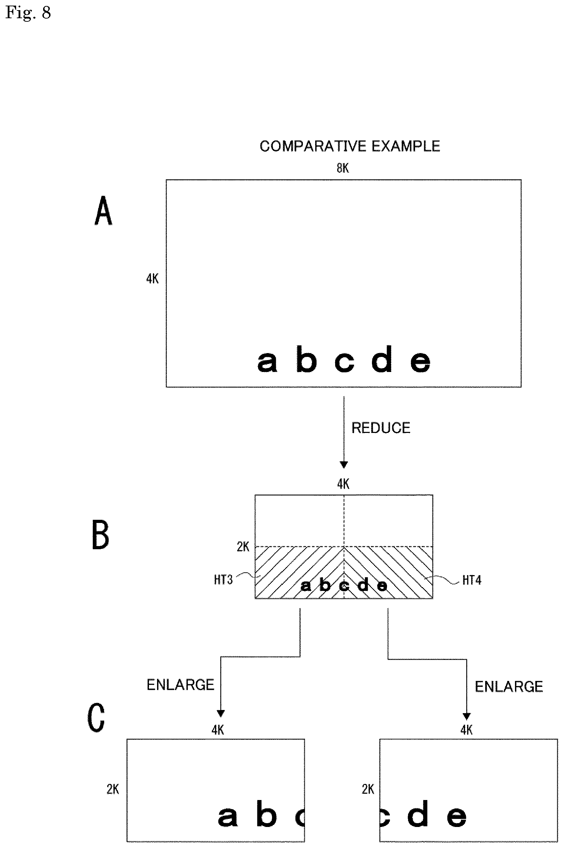

   Fig. 8 is an illustrative diagram of subtitle processing in a comparative example.
[Fig. 9]

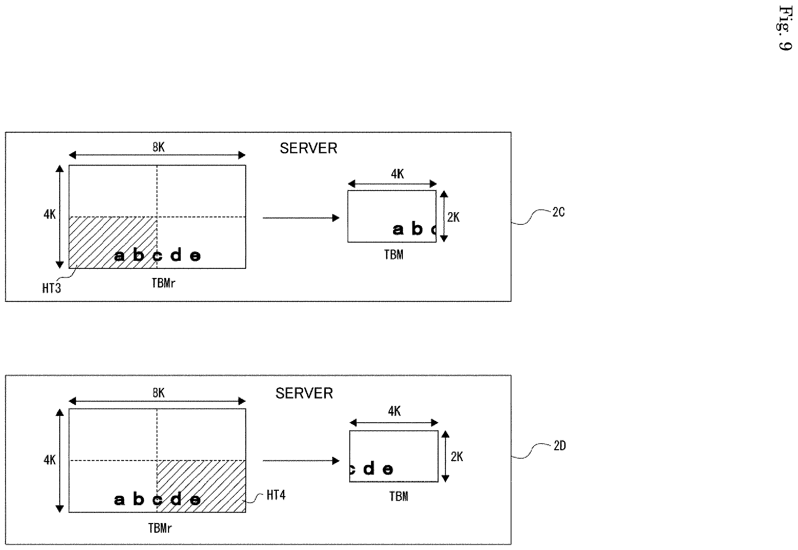

   Fig. 9 is an illustrative diagram of a first subtitle processing example of the embodiment.
[Fig. 10]

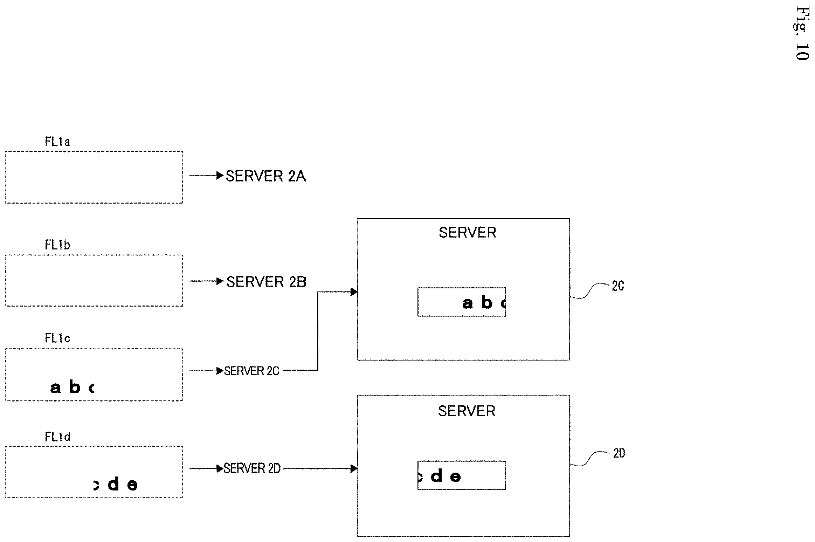

   Fig. 10 is an illustrative diagram of a second subtitle processing example of the embodiment.
[Fig. 11]

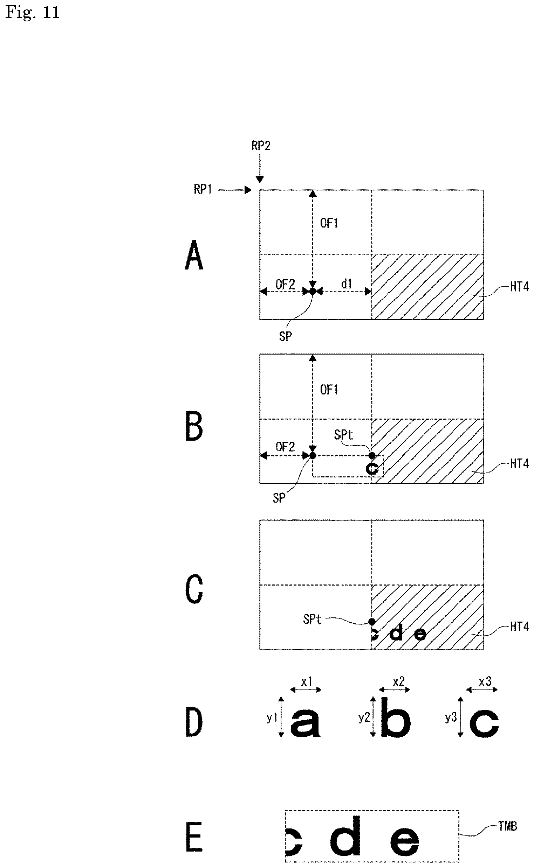

   Fig. 11 is an illustrative diagram of a third subtitle processing example of the embodiment.
[Fig. 12]

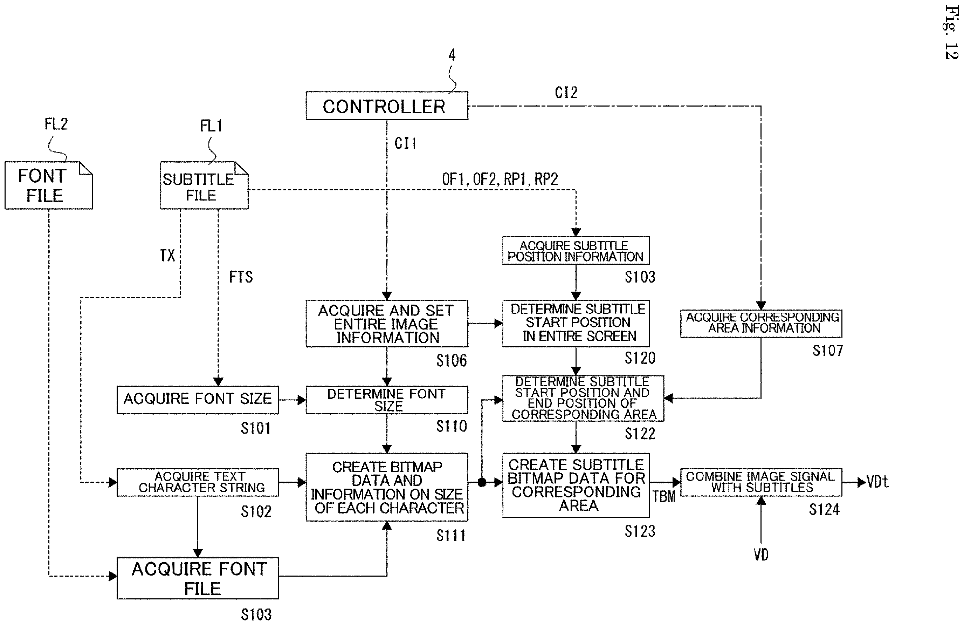

   Fig. 12 is an illustrative diagram of a processing procedure of the third subtitle processing example of the embodiment.

### [Description of Embodiments]

Hereinafter, embodiments will be described in the following order.
<1. System configuration>
<2. Server configuration>
<3. Image processing of server>
<4. Subtitle processing of server>
[4-1: Overview of subtitle processing and comparative example]
[4-2: First subtitle processing example]
[4-1: Second subtitle processing example]
[4-1: Third subtitle processing example]
<5. Conclusion and modification examples>

The notation of a resolution (the number of pixels) in the description will be described.
Generally, "2K", "4K", and "8K" are
2K: 1920 pixels x 1020 pixels
4K: 3840 pixels x 2160 pixels
8K: 7680 pixels x 4320 pixels
in horizontal and vertical directions, for example (here, the resolution is not necessarily limited to this number of pixels).

In the description and drawings, the notation of "2K", "4K", "8K", are the like will be denoted, but as an example in the description, when the notations of "2K", "4K", and "8K" are denoted in a horizontal direction of an image or screen, "2K", "4K", and "8K" mean 1920 pixels, 3840 pixels, and 2160 pixels, respectively, and when the notations of "2K", "4K", and "8K" are denoted in a vertical direction of an image or screen, "2K", "4K", and "8K" mean 1020 pixels, 2160 pixels, and 4320 pixels, respectively.

Further, for the sake of description, the notation of "8K4K" and the like denotes a screen size of an image signal or a display panel, but this indicates the number of pixels in "horizontal and vertical directions", and means a size of 8K (7680 pixels) in the horizontal direction and 4K (2160 pixels) in the vertical direction.

The above specific numbers of pixels are examples for description and the present technology is not limited to these numbers of pixels.

### <1. System configuration>

Fig. 1 is a block diagram illustrating an example of a configuration of a display system of an embodiment.

This display system includes an image source 1, a plurality of servers 2 (for example, servers 2A, 2B, 2C, and 2D), a display device 3, and a controller 4.

A notation "server 2" is used when the respective servers 2A, 2B, 2C, and 2D are collectively referred to without any particular distinction.

The image source 1 indicates a unit that supplies an image signal that is a display target and subtitle information associated therewith to the server 2.

A specific example of the image source 1 is a storage device that stores an image signal of a moving image or a still image. Further, a device for receiving image data transmitted by wire or wirelessly from an external device is also an example of the image source 1.

Further, for example, a playback device that reads an image signal from a storage medium such as a memory card, an optical disc, or a magnetic tape, and a hard disk drive (HDD) are also examples of the image source 1.

Here, the image source 1 supplies a video file FL0 including an image signal as a moving image or a still image to the server 2.

Further, the image source 1 supplies a subtitle file FL1 and a font file FL2 as subtitle information to each server 2. Content of the subtitle file FL1 or the font file FL2 will be described below.

Each of the servers 2A, 2B, 2C, and 2D is a device that decodes information of the video file FL0 to generate a reproduction image, and supplies the reproduction image to the display device 3, that is, a player.

Here, as an example, it is assumed that the respective servers 2A, 2B, 2C, and 2D are the same devices, and are 4K-compatible players. That is, each of the servers 2A, 2B, 2C, and 2D supplies an image signal as a 4K image to the display device 3.

The display device 3 includes a display panel 3a, and performs processing for combining the image signals from the servers 2A, 2B, 2C, and 2D and displaying a resultant image on the display panel 3a.

Here, a display panel including a display area with a resolution of 8K4K is illustrated as the display panel 3a. The display panel 3a is divided into 4K2K display areas AR1, AR2, AR3, andAR4, and the respective display areas AR1, AR2, AR3, and AR4 are assigned to the servers 2A, 2B, 2C, and 2D.

That is, the server 2A uses the display area AR1 as the corresponding area, generates an image signal to be displayed in the display area AR1, and supplies the image signal to the display device 3.

The server 2B uses the display area AR2 as the corresponding area, generates an image signal to be displayed in the display area AR2, and supplies the image signal to the display device 3.

The server 2C uses the display area AR3 as the corresponding area, generates an image signal to be displayed in the display area AR3, and supplies the image signal to the display device 3.

The server 2D uses the display area AR4 as the corresponding area, generates an image signal to be displayed in the display area AR4, and supplies the image signal to the display device 3.

The display device 3 displays the image signals of the respective corresponding areas from the servers 2A, 2B, 2C, and 2D as described above in the respective display areas AR1, AR2, AR3, and AR4, thereby realizing a large screen display with the resolution of 8K4K, for example.

In other words, since the display area of which one server 2 is in charge has a 4K2K size, a 4K-compatible player can be used as each server 2.

The display panel 3a is set to 8K4K as an example. For example, Fig. 2 illustrates an example in which a display of the 16K8K display panel 3a is executed using 16 4K-compatible servers 2.

As in this example, for example, a required number of servers 2 that are 4K-compatible players can be used to construct a display system corresponding to display panels 3a having various sizes.

Although not illustrated, a display system having a display panel of 4K4K or a display panel of 8K2K in the horizontal and vertical directions can be constructed using two servers 2, for example.

Further, a display system having a display panel of 4K8K or 16K2K in addition to the illustrated 8K4K can be constructed using four servers 2, for example. Further, a display system having a display panel of 4K6K or a display panel of 12K2K can be constructed using six servers 2, for example.

Further, a display system having a display panel of 12K6K can be constructed using nine servers 2, for example.

In addition, various display systems may be assumed.

In Fig. 1, the controller 4 is configured of, for example, a computer device including a central processing unit (CPU), a read only memory (ROM), a random access memory (RAM), a flash memory, and the like.

This controller 4 is capable of communicating with the server 2, and supplies, for example, system setting information CI to each server 2.

One piece of subtitle information used for subtitle generation in the server 2, which is the entire image information CI1 of the display panel 3a or corresponding area information CI2 indicating the corresponding area of each of the servers 2A, 2B, 2C, and 2D is assumed as an example of the system setting information CI.

The entire image information CI1 is information on a resolution (image size) of the entire display panel 3a, that is, an area that is a sum of the display areas AR1, AR2, AR3, and AR4.

The display system can be configured without the controller 4. For example, a function corresponding to the controller 4 may be built into each server 2, and setting information (for example, the entire image information CI1 or corresponding area information CI2) of the controller 4 may be input to the respective servers 2A, 2B, 2C, and 2D by an operator or the like.

### <2. Server configuration>

A configuration example of the server 2 is illustrated in Fig. 3.

The server 2 includes a subtitle information acquisition unit 11, a subtitle processing unit 12, an image acquisition unit 21, a corresponding image generation unit 22, a combination unit 30, and an output unit 31.

The subtitle information acquisition unit 11 acquires the subtitle file FL1 and the font file FL2 from the image source 1, decodes a file content thereof, and sends the file content to the subtitle processing unit 12.

Further, the subtitle information acquisition unit 11 acquires the entire image information CI1 and the corresponding area information CI2 from the controller 4, for example, and sends the information to the subtitle processing unit 12.

The entire image information CI1 and the corresponding area information CI2 may be set and input to the server 2 by the operator, for example, at the time of system construction, instead of from the controller 4 as described above.

The subtitle processing unit 12 performs processing for performing rendering on the subtitles with a resolution (for example, 8K4K) of the entire image of the display panel 3a on the basis of the subtitle information (the subtitle file FL1, font file FL2, entire image information CI1, corresponding area information CI2) acquired by the subtitle information acquisition unit 11, and generating a subtitle image TBM of its own corresponding area among the plurality of display areas AR1, AR2, AR3, and AR4 divided in the display panel 3a. A specific example will be described below.

The image acquisition unit 21 acquires the video file FL0 from the image source 1, decodes content included in the video file FL0, that is, for example, image data (or still image data) of each frame as a moving image, and sends the content to the corresponding image generation unit 22.

The corresponding image generation unit 22 performs processing for generating an image signal VD of its own corresponding area among the display areas AR1, AR2, AR3, and AR4 of the display panel 3a.

For example, when the image acquisition unit 21 acquires the image signal of the image content to be displayed on the entire display panel 3a, the corresponding image generation unit 22 crops and enlarges an image of the image signal, which is a part of the image signal, to generate an image signal of the image content for the corresponding area.

Alternatively, for example, when the image acquisition unit 21 acquires the image signal of the image content of only the corresponding area in the image content displayed on the entire display panel 3a, the corresponding image generation unit 22 enlarges an image of the image signal to generate the image signal of the image content for the corresponding area.

Of course, it is also assumed that the image signal of the image content for the corresponding area may be generated using other methods.

The combination unit 30 combines the subtitle image generated by the subtitle processing unit 12 with the image signal generated by the corresponding image generation unit 22 to generate an image signal with subtitles VDt.

The output unit 31 outputs the image signal with subtitles VDt of the corresponding area generated by the combination unit 30 to the display device 3. Since the image signals with subtitles VDt of the respective corresponding areas are supplied from the output units 31 of the respective servers 2A, 2B, 2C, and 2D to the display device 3, a large screen display in which images are disposed vertically and horizontally is performed in the display panel 3a.

### <3. Image processing of server>

Various examples of image processing performed in the server 2 above will be described. That is, these will be a scheme for generating the image signal VD of its own corresponding area, which is performed by the image acquisition unit 21 and the corresponding image generation unit 22 of the server 2.

Fig. 4 illustrates an example of a case in which an image signal as a 4K material is displayed in 8K on an 8K4K display panel 3a using four 4K-compatible servers 2.

The image source 1 supplies the video file FL0 including a 4K2K image signal to the respective servers 2A, 2B, 2C, and 2D.

The image acquisition unit 21 of each server 2 acquires and decodes this video file FL0.

The corresponding image generation unit 22 crops and enlarges an image of its own corresponding area (a shaded portion in Fig. 4) in the decoded image signal. The cropped image of the corresponding area is 2K1K, and the corresponding image generation unit 22 enlarges the image to a 4K2K size and uses a resultant image as the image signal VD of its own corresponding area.

Each of the servers 2A, 2B, 2C, and 2D generates the image signal VD in which the image of the corresponding area indicated by the shaded portion is enlarged to a 4K2K size, and supplies the image signal VD to the display device 3. The display device 3 combines the image signals VD as images of the respective display areas AR1, AR2, AR3, and AR4 and displays the resultant image on the display panel 3a so that an 8K4K image is displayed.

Fig. 5 is also an example of a case in which an image signal as a 4K material is displayed in 8K on the 8K4K display panel 3a using four 4K-compatible servers 2.

The image source 1 supplies the video files FL0A, FLOB, FLOC, and FL0D including images obtained by dividing the 4K2K image into 2K1K areas to the respective servers 2A, 2B, 2C, and 2D.

The image acquisition units 21 of the respective servers 2A, 2B, 2C, and 2D acquire and decode the corresponding video file FL0 (FL0A, FLOB, FLOC, and FL0D) .

The decoded image signal is a 2K1K image signal. Therefore, the corresponding image generation unit 22 enlarges the image signal to a 4K2K size to obtain the image signal VD of its own corresponding area.

Each of the servers 2A, 2B, 2C, and 2D generates the image signal VD of the corresponding area enlarged to the 4K2K size as described above and supplies the image signal VD to the display device 3. The display device 3 combines the image signals VD as images of the respective display areas AR1, AR2, AR3, and AR4 and displays the resultant image on the display panel 3a so that an 8K4K image is displayed.

Fig. 6 is an example of a case in which an image signal originally made of 8K material is displayed in 8K on the 8K4K display panel 3a using four 4K-compatible servers 2.

The image source 1 supplies the video files FL0A, FLOB, FLOC, FL0D including images obtained by dividing an 8K4K image into 4K2K areas to the respective servers 2A, 2B, 2C, and 2D.

The image acquisition units 21 of the respective servers 2A, 2B, 2C, and 2D acquire and decode the corresponding video file FL0 (FL0A, FLOB, FLOC, and FL0D) .

The decoded image signal is already the 4K2K image signal. Therefore, the corresponding image generation unit 22 uses this image signal as the image signal VD of its own corresponding area.

The respective servers 2A, 2B, 2C, and 2D supply the image signal VD of the corresponding area having a 4K2K size to the display device 3 as described above. The display device 3 combines the image signals VD as images of the respective display areas AR1, AR2, AR3, and AR4 and displays the resultant image on the display panel 3a so that the 8K4K image is displayed.

### <4. Subtitle processing of server>

### [4-1: Overview of subtitle processing and comparative example]

Next, subtitle processing of the server 2 will be described. First, an overview of the subtitle processing will be described with reference to Fig. 7.

Fig. 7A illustrates a group of files as a package that is supplied from the image source 1 to the server 2. That is, the group includes the video file FL0, the subtitle file FL1, and the font file FL2.

When the subtitle file FL1 and the font file FL2 are provided in correspondence to the video file FL0 as described above, the server 2 performs the subtitle processing so that subtitle display is performed on an image display.

In an example, the subtitle file FL1 and the font file FL2 are provided as the subtitle information.

As a package, a subtitle image may be supplied as a portable network graphics (PNG) file to the server 2 or the PNG file may be supplied to the server 2 together with the subtitle file FL1 and the font file FL2.

In the present embodiment, an example in which the subtitle file FL1 and the font file FL2 are used is described.

The subtitle file FL1 may be, for example, an extensible markup language (XML) file and the content thereof may state:
- Text data (TX)
- Vertical reference position (RP1) and horizontal reference position (RP2)
- Vertical offset (OF1) and horizontal offset (OF2)
- Font size (FTS).

The text data (TX) is text data of a character string that actually becomes subtitles. Fig. 7B illustrates subtitles of a character string that is "abcde".

The vertical reference position (RP1) is information indicating a vertical position as a reference for a subtitle position in the display image, and is information such as "TOP" (top of a screen) or "BOTTOM" (bottom of the screen).

The horizontal reference position (RP2) is information indicating a horizontal position as a reference for the subtitle position in the display image, and is information such as "LEFT" (a left end of the screen) or "RIGHT" (a right end of the screen).

The vertical offset (OF 1) is a subtitle start position within the display image and is information indicating an amount of offset in a vertical direction from the vertical reference position (RP1), and is represented as a ratio with respect to a vertical size of the image, such as "80%".

The horizontal offset (OF2) is a subtitle start position within the display image and is information indicating an amount of offset in a horizontal direction from the horizontal reference position (RP2), and is represented as a ratio with respect to a horizontal size of the image, such as "40%".

The font size (FTS) indicates a font size as a ratio with respect to a size of the display image.

A font of the characters forming subtitles is described in the font file FL2.

The subtitle image generated by subtitle processing in which the subtitle file FL1 and the font file FL2 have been used is illustrated in an upper part of Fig. 7B. For example, the subtitle image is a subtitle image in which the subtitles of the character string "abcde" are disposed from the subtitle start position determined using the vertical reference position (RP1: TOP), the horizontal reference position (RP2: LEFT), the vertical offset (OF1), and the horizontal offset (OF2).

An image in which subtitles decoded from the video file FL0 are combined is illustrated in a lower part of Fig. 7B.

The images in the upper and lower parts of Fig. 7B are combined so that an image signal as a subtitle combination image is generated as illustrated in Fig. 7C.

In the case of the server 2 of the present embodiment, the corresponding image generation unit 22 generates an image signal VD corresponding to the image in the lower part of Fig. 7B, the subtitle processing unit 12 generates a subtitle image TBM corresponding to the image in the upper part of Fig. 7B, and the combination unit 30 combines these to generate the image signal with subtitles VDt.

Here, an example in which subtitle processing in a case in which the corresponding area is divided by each server 2 as described above has been assumed will be described with reference to Fig. 8. This is a processing example given as a comparative example with respect to the subtitle processing of the present embodiment.

It is assumed that subtitle information in which an image size of 8K4K is assumed is prepared and supplied to each server 2. That is, this is a case in which a subtitle image having an 8K4K size as illustrated in Fig. 8A is assumed and the subtitle image of the corresponding area is generated.

In this case, each 4K-compatible server 2 temporarily performs rendering for reduction to a 4K2K size as illustrated in Fig. 8B.

In this case, the server 2 (for example, the server 2C) in charge of the shaded portion HT3 in the image crops a 2K1K area of the shaded portion HT3 and enlarges the area to a 4K2K size. Accordingly, a subtitle image of the corresponding area is generated as illustrated in Fig. 8C.

Further, in the server 2 (for example, server 2D) in charge of the shaded portion HT4, the 2K1K area of the shaded portion HT4 is cropped and enlarged to the 4K2K size. Accordingly, a subtitle image of the corresponding area is generated as illustrated in Fig. 8D.

When each server 2 generates the subtitle image as described above, combines the subtitle image with the image signal of the corresponding area, and supplies a resultant signal to the display device 3, a subtitle display can be performed even in a system in which the plurality of servers 2A, 2B, 2C, and 2D are in charge of the respective display areas AR1, AR2, AR3, and AR4.

However, in the case of this comparative example, processing of enlarging the subtitle image temporarily reduced as illustrated in Fig. 8B is included. Therefore, display quality of the characters constituting the subtitle deteriorates. That is, the characters are displayed as angular ones (jagged ones).

Therefore, as the present embodiment, subtitle processing such as first, second, and third subtitle processing examples, which will be described below, is performed.

### [4-2: First subtitle processing example]

A first subtitle processing example of the embodiment will be described with reference to Fig. 9. This is an example in which the subtitle processing unit 12 performs rendering of the subtitle using the storage area (work memory) corresponding to the resolution of the entire image of the display panel 3a and crops the corresponding area to generate the subtitle image TBM. In this case, the 4K-compatible server 2 includes an 8K4K-compatible work memory.

Fig. 9 schematically illustrates the processing of the subtitle processing unit 12 of the servers 2C and 2D.

The subtitle processing unit 12 performs rendering of the subtitle image to generate a subtitle image TBMr having an 8K4K size as illustrated in Fig. 9 on the basis of the subtitle information acquired by the subtitle information acquisition unit 11. In this case, the subtitle image TBMr is generated on a work memory having an 8K4K size.

Its own corresponding area is cropped from the subtitle image TBMr.

That is, in the case of the server 2C, a shaded portion HT3, which is the corresponding area, is cropped and used as the subtitle image TBM. This subtitle image TBM has a 4K2K size.

In the case of the server 2D, a shaded portion HT4, which is the corresponding area, is cropped and used as the subtitle image TBM having the 4K2K size.

In this example, for the servers 2A and 2B, subtitles are not illustrated because the subtitles do not exist in the corresponding area, but similarly, its own corresponding area is cropped from the subtitle image TBMr rendered in 8K4K and the subtitle image TBM is generated.

Each server 2 generates the subtitle image TBM as described above, combines the subtitle image TBM with the image signal VD to generate the image signal with subtitles VDt, and outputs the image signal with subtitles VDt to the display device 3. Accordingly, a display of an image with subtitles having an 8K4K size is performed.

In this case, since the subtitles do not involve the enlargement processing as in the comparative example of Fig. 8, high-quality character display is performed.

### [4-1: Second subtitle processing example]

A second subtitle processing example of the embodiment will be described with reference to Fig. 10. This is an example in which respective dedicated subtitle files FL1 are prepared for the respective servers 2A, 2B, 2C, and 2D.

In Fig. 10, subtitle files FL1a, FL1b, FL1c, and FLld are illustrated using the image of the subtitle image generated by the subtitle file. The subtitle file FLla is supplied to the server 2A, the subtitle file FLlb is supplied to the server 2B, the subtitle file FLlc is supplied to the server 2C, and the subtitle file FL1d is supplied to the server 2D.

The subtitle processing units 12 of the respective servers 2A, 2B, 2C, and 2D generate the subtitle images TBM corresponding to 8K4K resolution on the basis of the supplied subtitle files FL1a, FL1b, FL1c, and FL1d, respectively. In this case, the subtitle image TBM may be only an image of the subtitle portion (the subtitle image TBM does not have to be the image of the entire corresponding area).

Each server 2 generates the subtitle image TBM, combines the subtitle image TBM with the image signal VD to generate the image signal with subtitles VDt, and outputs the image signal with subtitles VDt to the display device 3, as described above. Accordingly, a display of an image with subtitles having an 8K4K size is performed.

In this case, since the subtitles do not involve the enlargement processing as in the comparative example of Fig. 8, high-quality character display is performed as well.

### [4-1: Third subtitle processing example]

A third subtitle processing example of the embodiment will be described with reference to Figs. 11 and 12. This is an example in which the subtitle processing unit 12 determines the subtitle portion within the corresponding area and performs rendering of the subtitle portion with the resolution of the entire image to generate the subtitle image TBM.

The subtitle portion within the corresponding area means a portion that is displayed within the corresponding area among the character strings constituting the subtitle and the like.

In the first subtitle processing example described above, although each server 2 supports 4K, the server 2 requires a work memory for 8K4K, which increases a memory capacity burden, whereas in the third subtitle processing example, each server 2 can generate the subtitle image TBM within a work memory for 4K2K, which is normally included when the server 2 supports 4K.

Further, in the second subtitle processing example, the dedicated subtitle file FL1 must be prepared for each server 2, a burden on a subtitle creator increases, and the subtitle file FL1 must be changed depends on the resolution of the display panel 3a, which is a disadvantage in terms of flexibility of system construction. On the other hand, in the third subtitle processing example, the common subtitle file FL1 may be provided to the respective servers 2 and can be used regardless of change in the resolution of the display panel 3a.

An overview of the third subtitle processing example will be described with reference to Fig. 11.

The subtitle information acquisition unit 11 acquires the subtitle file FL1 and the font file FL2. Further, the subtitle information acquisition unit 11 acquires the entire image information CI1 and the corresponding area information CI2 of the display panel 3a supplied from the controller 4 in advance (or set by the operator operation or the like in advance), for example. The subtitle processing unit 12 performs subtitle processing on the basis of this information, as follows.

Fig. 11 schematically illustrates processing of the server 2D in which a shaded portion HT4 is a corresponding area.

The subtitle processing unit 12 first determines a subtitle start position SP as illustrated in Fig. 11A. This is to obtain a position in which disposition from the first character of the subtitles is started in an area of 8K4K that is the resolution of the entire image of the display panel 3a.

This subtitle start position SP can be calculated from the vertical reference position RP1, the horizontal reference position RP2, the vertical offset OF1, and the horizontal offset OF2 in the subtitle file FL1.

Further, the subtitle processing unit 12 calculates a distance from the subtitle start position SP to its own corresponding area. As illustrated in Fig. 11, in the case of the server 2D, the distance is a distance d1 from the subtitle start position SP to a left end of the shaded portion HT4.

The subtitle processing unit 12 calculates a size of each character of the subtitle and determines the start position and the first character of its own corresponding area.

An example of the size of the character is illustrated in Fig. 11D. For example, a size of a character "a" is specified as horizontal x1 and vertical y1, a size of a character "b" is horizontal x2 and vertical y2, and a size of a character "c" is horizontal x3 and vertical y3.

Vertical and horizontal sizes of the entire character string can be specified by specifying the sizes of the respective characters as described above. Although a space or the like may be included between the characters of the character string, the size of the character string including the space or the like is calculated. the size of the character string is obtained from the sizes of the respective characters so that an end position of the first character or character string disposed in its own corresponding area can be determined.

That is, the subtitle portion disposed in the corresponding area (a portion of the entire subtitles disposed in the corresponding area) can be determined.

Further, the subtitle start position SPt in its own corresponding area can be calculated from the subtitle start position SP and the distance d1.

For example, Fig. 11B illustrates a case in which the first character in the corresponding area in the case of the server 2D is "c" (to be exact, a right half of "c").

From the above, when the character string of the subtitles is "abcde", the subtitle processing unit 12 of the server 2D may generate a subtitle image including "cde" (here, only a right half of "c" is shown).

Therefore, the subtitle processing unit 12 of the server 2D performs rendering in order from (a part of) a first character to generate the subtitle image TBM as bitmap data of the character in its own corresponding area, as illustrated in Fig. 11E.

Fig. 11C illustrates a state in which the subtitle image TBM, which is the bitmap data, is superimposed in the 8K4K size.

The above processing will be described in detail in Fig. 12. Fig. 12 illustrates a flow and relationship of respective processing steps.

It is conceivable that steps S101 to S107 in Fig. 12 are processing of the subtitle information acquisition unit 11, steps S110, S111, S120, S122, and S123 be processing of the subtitle processing unit 12, and step S124 is processing of the combination unit 30. However, such classification of processing is an example.

Step S101 indicates that the subtitle information acquisition unit 11 acquires information on the font size FTS described in the subtitle file FL1.

Step S102 indicates that the subtitle information acquisition unit 11 acquires text data TX described in the subtitle file FL1, that is, information on the character string of the subtitle.

Step S103 indicates that the subtitle information acquisition unit 11 acquires the subtitle position information. That is, the subtitle information acquisition unit 11 acquires the vertical reference position RP1, the horizontal reference position RP2, the vertical offset OF1, and the horizontal offset OF2 described in the subtitle file FL1.

Step S105 indicates that the subtitle information acquisition unit 11 acquires information on the font file FL2.

Step S106 indicates that the subtitle information acquisition unit 11 acquires the entire image information CI1 of the image displayed on the display panel 3a and sets the entire image information CI1 as information used for the subtitle processing.

Step S107 indicates that the subtitle information acquisition unit 11 acquires the corresponding area information CI2 in the display panel 3a.

The subtitle processing unit 12 determines the font size of the subtitles in step S110. Since the font size FS in the subtitle file FL1 is described as a ratio to the resolution (image size) of the entire image, an actual font size is obtained using information on the entire image information CI1 and the font size FS.

The subtitle processing unit 12 creates bitmap data and information on the size of each character using the determined font size and the text data TX, and the information on the font file FL2 in step S111.

On the other hand, in step S120, the subtitle processing unit 12 determines the subtitle start position SP in the resolution of the entire image. This can be calculated from the entire image information CI1, the vertical reference position RP1, the horizontal reference position RP2, the vertical offset OF1, and the horizontal offset OF2.

In step S122, the subtitle processing unit 12 calculates the subtitle start position SPt and the end position of the corresponding area. The subtitle processing unit 12 ascertains its own corresponding area with the resolution of the entire image, which is, for example, 8K4K, using the corresponding area information CI2. Therefore, the subtitle start position SPt in its own corresponding area can be calculated from the subtitle start position SP and the distance d1, as described above.

Further, the subtitle processing unit 12 can receive the size of the character string obtained from the sizes of the respective characters of the subtitles, the subtitle start position SP, and the distance d1 and calculate the subtitle end position within the corresponding area.

On the basis of the information in steps S122 and S111, the subtitle processing unit 12 can determine the subtitle portion within the corresponding area and the subtitle start position SPt in the corresponding area. Therefore, in step S123, the subtitle processing unit 12 generates subtitle bitmap data for its own corresponding area on the basis of the information in steps S122 and S111. The subtitle bitmap data is supplied as the subtitle image TBM to the combination unit 30.

The combination unit 30 combines the image signal VD with the subtitle image TBM and outputs the image signal with subtitles VDt in step S124.

Each server 2 generates the subtitle image TBM, combines the subtitle image TBM with the image signal VD to generate the image signal with subtitles VDt, and outputs the image signal with subtitles VDt to the display device 3 as described above, so that a display of the image with subtitles having an 8K4K size is performed in the display panel 3a.

In this case, since the subtitles do not involve the enlargement processing as in the comparative example of Fig. 8, high-quality character display is performed as well.

### <5. Conclusion and modification example>

According to the above embodiments, the following effects can be obtained.

The server 2 (image processing device) of the embodiment includes the subtitle information acquisition unit 11 that acquires the subtitle information, and the subtitle processing unit 12 that performs rendering of the subtitles with the resolution of the entire image of the display panel 3a on the basis of the subtitle information acquired by the subtitle information acquisition unit 11 to generate the subtitle image TBM of the corresponding area among the plurality of display areas AR1, AR2, AR3, and AR4 divided in the display panel 3a. Further, the server 2 includes the corresponding image generation unit 22 that generates the image signal VD of the corresponding area, and the combination unit 30 that combines the subtitle image TBM generated by the subtitle processing unit with the image signal VD generated by the corresponding image generation unit 22 to generate the image signal with subtitles VDt.

In this case, the subtitle image TBM (for example, subtitle bitmap data) is obtained by performing rendering on the subtitles with the resolution of the entire image of the display panel 3a, and has character image quality according to the resolution. For example, when the resolution of the entire image of the display panel 3a is 8K4K, the subtitle image has quality at an 8K4K level. Therefore, an easy-to-read and high-quality subtitle display is realized.

In particular, in the case of characters unlike an image, when the size is adjusted to a display screen by enlarging, the image becomes an angular one (an image with conspicuous jaggedness), and quality of the characters deteriorates, whereas in the technology of the embodiment, such a character image is not obtained, but smooth characters matching the resolution of the display panel 3a are obtained. Further, when the above effects are considered, the technology of the embodiment is a subtitle processing scheme capable of efficient and beautiful character depiction, for example, in a case in which one image is displayed using a plurality of servers 2 (players) as in a large tiling display, such as a case in which a display is performed on the 8K4K display panel 3a using four 4K-compatible servers 2.

In the first and third embodiments, an example in which the subtitle information acquisition unit 11 of the server 2 acquires the subtitle information common to the subtitle information acquisition units 11 of the other servers 2 that are in charge of the other display areas has been given.

That is, the common subtitle information (the subtitle file FL1 and the font file FL2) is supplied from the image source 1 to the plurality of respective used servers 2 (for example, servers 2A, 2B, 2C, 2D).

In this case, an image creator or an image provider does not need to separately create the subtitle file FL1 or the font file FL2 corresponding to the respective servers 2. Therefore, time and effort for creating subtitle information are not excessive.

Further, since the subtitle information is common, the common subtitle information can be used by a system using four servers 2, a system using nine servers 2, a system using 16 servers 2, and the like. Accordingly, flexibility of a system configuration can be realized, and the time and effort for creating the subtitle information according to the system configuration do not occur.

In the first and third embodiments, an example in which the subtitle information acquisition unit 11 acquires a subtitle file having the same content as in the other server 2, as the subtitle file FL1 including information on the text data TX of the subtitle character string, the subtitle position information (the vertical reference position RP1, horizontal reference position RP2, vertical offset OF1, and horizontal offset OF2 in the subtitle file FL1), and the font size FS as the subtitle information.

As the content of the subtitle file FL1, specifically, the text data of the subtitle character string, the subtitle position information, and the font information are described with reference to the output image of the display panel 3a. The respective servers 2 (for example, the servers 2A, 2B, 2C, and 2D) can acquire the common subtitle file FL1 based on such a resolution of the entire image of the display panel, and use the common subtitle file FL1 to perform rendering of the subtitles with the resolution of the entire image.

In the first embodiment, an example in which the subtitle processing unit 12 performs rendering of the subtitle using a storage area (work memory) corresponding to the resolution of the entire image of the display panel 3a, and crops the corresponding area to generate the subtitle image TBM has been given. Each of the plurality of used servers 2 (for example, the servers 2A, 2B, 2C, and 2D) performs rendering of the subtitles using the work memory for the resolution (for example, 8K4K) of the entire image of the display panel 3a. This makes it possible to generate a subtitle image at a resolution level of an 8K4K size, and improve the quality of the subtitle display even when the server 2 is compatible with 4K2K, for example. In particular, since processing such as enlargement or reduction of characters is not included, the characters are not displayed as angular ones and a beautiful character display can be performed.

In the third embodiment, an example in which the subtitle processing unit 12 determines the subtitle portion within the corresponding area and performs rendering of the subtitle portion with the resolution of the entire image to generate the subtitle image has been given.

Accordingly, since the server 2 can perform processing without requiring a work memory that exceeds a work memory for its own corresponding area (for example, 4K2K), a burden on a memory area of the server 2 can be reduced. In this case, since processing such as enlargement or reduction of characters is not included, the characters are not displayed as angular ones, and a high-quality character image can be generated.

Further, a processing burden can be reduced simply by performing rendering on the subtitle portion disposed in the corresponding area.

Further, the determination of the subtitle portion within the corresponding area, the subtitle start position SP, and the like can be performed through a common calculation, and it is not necessary for software of the server 2 to be changed depending on the corresponding area.

Further, when resolution (a screen size) of an image to be displayed changes, the same subtitle file can be used.

In the third embodiment, an example in which the subtitle processing unit 12 performs rendering of the image size for the corresponding area using the subtitle start point SP in the resolution of the entire image of the display panel 3a, the font size (the font size determined in step S110) in the resolution of the entire image of the display panel, the subtitle start position SPt within the corresponding area, and information on the subtitle portion within the corresponding area has been given (see steps S111, S122, and S123).

The server 2 can determine the start position of the subtitle and the subtitle portion (a portion of the character string constituting the subtitles disposed within the corresponding area) in its own corresponding area, making it possible to perform rendering of the subtitle image for the corresponding area.

In the third embodiment, the subtitle information acquisition unit 11 acquires the subtitle file FL1 including the font size FS and also acquires the entire image information CI1 of the display panel 3a. The subtitle processing unit 12 determines the font size of the subtitle according to the resolution of the entire image of the display panel using the information on the resolution of the entire image of the display panel 3a and the font size FS of the subtitle file FL1 (see steps S101, S102, S103, S106, and S110).

Since information on the ratio to the resolution of the entire image is present as information on the font size FS in the subtitle file FL1, the font size according to the resolution of the entire image can be obtained, and subtitle rendering according to the resolution of the entire image in the case of system construction is possible. In other words, the subtitle rendering processing can be flexibly supported regardless of the resolution of the entire image of the display panel 3a.

In the third embodiment, the subtitle information acquisition unit 11 acquires the subtitle file FL1 including the text data TX of the subtitle character string, the subtitle position information (RP1, RP2, OF1, and OF2), and the font size FS as the subtitle information, and acquires the entire image information CI1 and the corresponding area information CI2 of the display panel 3a. An example in which the subtitle processing unit 12 determines the subtitle start position SP according to the resolution (for example, 8K4K) of the entire image of the display panel 3a and the subtitle start position SPt in the corresponding area using the entire image information CI1 and the corresponding area information CI2 of the display panel 3a, and the subtitle position information (RP1, RP2, OF1, and OF2) of the subtitle file FL1 has been given (see steps S120 and S122).

This makes it possible to perform rendering of the subtitles according to the resolution of the entire image, which is subtitle rendering for its own corresponding area.

In the third embodiment, an example in which the subtitle processing unit 12 obtains the sizes of the respective characters constituting the subtitle and performs rendering of the subtitle portion within the corresponding area from the subtitle start position SPt in the corresponding area to generate the subtitle image has been given (see steps S111 and S123).

This makes it possible to perform subtitle rendering using the work memory area for its own corresponding area even when this is the subtitle rendering according to the resolution of the entire image.

The server 2 of the embodiment includes the output unit 31 that outputs the image signal with subtitles VDt for the corresponding area generated by the combination unit 30 to the display device 3 having the display panel 3a.

In this case, each server 2 supplies the image signal with subtitles VDt of its own corresponding area to the display device 3, and images thereof are assigned to the respective display areas and displayed in the display device 3. Accordingly, a display of the image with subtitles is executed on a large screen and with good character quality.

An image in which in the server 2 of the embodiment, the corresponding image generation unit 22 acquires the image signal with the image content to be displayed on the entire display panel, crops an image of the corresponding area as a part of the image signal, and enlarges the image to generate the image signal with the image content for the corresponding area has been given (see Fig. 4).

Each server 2 can crop and enlarge the image of its own corresponding area so that a large screen display with a higher resolution can be performed on the display panel 3a.

An example in which in the server 2 of the embodiment, the corresponding image generation unit 22 acquires the image signal with the image content of only the corresponding area in the image content displayed on the entire display panel and performs enlargement on the image signal to generate the image signal with the image content of the corresponding area has been given (see Fig. 5).

Each server 2 enlarges the input image to generate the image of its own corresponding area so that a large screen display with a higher resolution can be performed on the display panel 3a.

The effects described in the present specification are merely examples and are not limited, and other effects may be obtained.

The present technology can also adopt the following configurations.
(1) An image processing device including:
   a subtitle information acquisition unit configured to acquire subtitle information; a subtitle processing unit configured to perform rendering of subtitles with a resolution of an entire image of a display panel on the basis of the subtitle information acquired by the subtitle information acquisition unit to generate a subtitle image of a corresponding area among a plurality of display areas divided in the display panel;
   a corresponding image generation unit configured to generate an image signal of the corresponding area; and
   a combination unit configured to combine the subtitle image generated by the subtitle processing unit with the image signal generated by the corresponding image generation unit to generate an image signal with subtitles.
(2) The image processing device according to (1), wherein the subtitle information acquisition unit acquires subtitle information common to the subtitle information acquisition units of the image processing devices that are in charge of the other display areas.
(3) The image processing device according to (1) or (2), wherein the subtitle information acquisition unit acquires a subtitle file including text data of a subtitle character string, subtitle position information, and font size information as the subtitle information, the subtitle file being a subtitle file with the same content as those for the subtitle information acquisition units of the image processing devices that are in charge of the other display areas.
(4) The image processing device according to any one of (1) to (3), wherein the subtitle processing unit performs rendering of the subtitles using a storage area corresponding to the resolution of the entire image of the display panel and crops the corresponding area to generate a subtitle image.
(5) The image processing device according to any one of (1) to (3), wherein the subtitle processing unit determines a subtitle portion within the corresponding area and performs rendering of the subtitle portion with the resolution of the entire image to generate a subtitle image.
(6) The image processing device according to (5), wherein the subtitle processing unit performs rendering of an image size for the corresponding area using a subtitle start point in the resolution of the entire image of the display panel, a font size in the resolution of the entire image of the display panel, a subtitle start position within the corresponding area, and information on the subtitle portion within the corresponding area.
(7) The image processing device according to (5) or (6),
   wherein the subtitle information acquisition unit acquires a subtitle file including font size information as the subtitle information, and also acquires information on the resolution of the entire image of the display panel, and the subtitle processing unit determines a font size of the subtitle according to the resolution of the entire image of the display panel using the information on the resolution of the entire image of the display panel and the information on the font size of the subtitle file.
(8) The image processing device according to any one of (5) to (7),
   wherein the subtitle information acquisition unit acquires a subtitle file including text data of a subtitle character string, subtitle position information, and font size information as the subtitle information, and also acquires information on the resolution of the entire image of the display panel and information on the corresponding area, and
   the subtitle processing unit determines a subtitle start position according to the resolution of the entire image of the display panel and a subtitle start position in the corresponding area using the information on the resolution of the entire image of the display panel, the information on the corresponding area, and the subtitle position information of the subtitle file.
(9) The image processing device according to any one of (5) to (8), wherein the subtitle processing unit obtains sizes of respective characters constituting the subtitles and performs rendering of the subtitle portion within the corresponding area from a subtitle start position in the corresponding area to generate a subtitle image.
(10) The image processing device according to any one of (1) to (9), including:
   an output unit configured to output an image signal with subtitles for the corresponding area generated by the combination unit to a display device including a display panel.
(11) The image processing device according to any one of (1) to (10), wherein the corresponding image generation unit acquires an image signal with image content to be displayed on the entire display panel, crops an image of the corresponding area as a part thereof, and enlarges the image to generate an image signal with image content for the corresponding area.
(12) The image processing device according to any one of (1) to (10), wherein the corresponding image generation unit acquires an image signal with image content of only the corresponding area in the image content displayed on the entire display panel and performs enlargement on the image signal to generate an image signal with the image content of the corresponding area.
(13) An image processing method including:
   acquiring subtitle information;
   performing rendering of subtitles with the resolution of an entire image of a display panel on the basis of the acquired subtitle information to generate a subtitle image of a corresponding area among a plurality of display areas divided in the display panel;
   generating an image signal of the corresponding area; and
   combining the image signal of the corresponding area with the subtitle image of the corresponding area to generate an image signal with subtitles.
(14) A display device including a display panel divided into a plurality of display areas, an image signal with subtitles being supplied from a plurality of image processing devices each including one of the display areas assigned as a corresponding area to each display area so that an image display is performed, and
   the image processing device includes:
   a subtitle information acquisition unit configured to acquire subtitle information; a subtitle processing unit configured to perform rendering of subtitles with a resolution of an entire image of a display panel on the basis of the subtitle information acquired by the subtitle information acquisition unit to generate a subtitle image of a corresponding area among a plurality of display areas divided in the display panel;
   a corresponding image generation unit configured to generate an image signal of the corresponding area; and
   a combination unit configured to combine the subtitle image generated by the subtitle processing unit with the image signal generated by the corresponding image generation unit to generate an image signal with subtitles.

### [Reference Signs List]

- 1: Image source
- 2, 2A, 2B, 2C, 2D: Server
- 3: Display device
- 3a: Display panel
- 4: Controller
- 11: Subtitle information acquisition unit
- 12: Subtitle processing unit
- 21: Image acquisition unit
- 22: Corresponding image generation unit
- 30: Combination unit
- 31: Output unit
- TBM: Subtitle bitmap data
- VD: Image signal
- VDt: Image signal with subtitles
- FL0: Video file
- FL1: Subtitle file
- FL2: Font file

## Claims

1. An image processing device comprising:
a subtitle information acquisition unit configured to acquire subtitle information; a subtitle processing unit configured to perform rendering of subtitles with a resolution of an entire image of a display panel on the basis of the subtitle information acquired by the subtitle information acquisition unit to generate a subtitle image of a corresponding area among a plurality of display areas divided in the display panel;
a corresponding image generation unit configured to generate an image signal of the corresponding area; and
a combination unit configured to combine the subtitle image generated by the subtitle processing unit with the image signal generated by the corresponding image generation unit to generate an image signal with subtitles.

2. The image processing device according to claim 1, wherein the subtitle information acquisition unit acquires subtitle information common to the subtitle information acquisition units of the image processing devices that are in charge of the other display areas.

3. The image processing device according to claim 1, wherein the subtitle information acquisition unit acquires a subtitle file including text data of a subtitle character string, subtitle position information, and font size information as the subtitle information, the subtitle file being a subtitle file with the same content as those for the subtitle information acquisition units of the image processing devices that are in charge of the other display areas.

4. The image processing device according to claim 1, wherein the subtitle processing unit performs rendering of the subtitles using a storage area corresponding to the resolution of the entire image of the display panel and crops the corresponding area to generate a subtitle image.

5. The image processing device according to claim 1, wherein the subtitle processing unit determines a subtitle portion within the corresponding area and performs rendering of the subtitle portion with the resolution of the entire image to generate a subtitle image.

6. The image processing device according to claim 5, wherein the subtitle processing unit performs rendering of an image size for the corresponding area using a subtitle start point at the resolution of the entire image of the display panel, a font size at the resolution of the entire image of the display panel, a subtitle start position within the corresponding area, and information on the subtitle portion within the corresponding area.

7. The image processing device according to claim 5,
wherein the subtitle information acquisition unit acquires a subtitle file including font size information as the subtitle information, and also acquires information on the resolution of the entire image of the display panel, and
the subtitle processing unit determines a font size of the subtitle according to the resolution of the entire image of the display panel using the information on the resolution of the entire image of the display panel and the information on the font size of the subtitle file.

8. The image processing device according to claim 5,
wherein the subtitle information acquisition unit acquires a subtitle file including text data of a subtitle character string, subtitle position information, and font size information as the subtitle information, and also acquires information on the resolution of the entire image of the display panel and
information on the corresponding area, and
the subtitle processing unit determines a subtitle start position according to the resolution of the entire image of the display panel and a subtitle start position in the corresponding area using the information on the resolution of the entire image of the display panel, the information on the corresponding area, and the subtitle position information of the subtitle file.

9. The image processing device according to claim 5, wherein the subtitle processing unit obtains sizes of respective characters constituting the subtitles and performs rendering of the subtitle portion within the corresponding area from a subtitle start position in the corresponding area to generate a subtitle image.

10. The image processing device according to claim 1, comprising:
an output unit configured to output an image signal with subtitles for the corresponding area generated by the combination unit to a display device including a display panel.

11. The image processing device according to claim 1, wherein the corresponding image generation unit acquires an image signal with image content to be displayed on the entire display panel, crops an image of the corresponding area as a part thereof, and enlarges the image to generate an image signal with image content for the corresponding area.

12. The image processing device according to claim 1, wherein the corresponding image generation unit acquires an image signal with image content of only the corresponding area in the image content displayed on the entire display panel and performs enlargement on the image signal to generate an image signal with the image content of the corresponding area.

13. An image processing method comprising:
acquiring subtitle information; performing rendering of subtitles with the resolution of an entire image of a display panel on the basis of the acquired subtitle information to generate a subtitle image of a corresponding area among a plurality of display areas divided in the display panel;
generating an image signal of the corresponding area; and
combining the image signal of the corresponding area with the subtitle image of the corresponding area to generate an image signal with subtitles.

14. A display device comprising a display panel divided into a plurality of display areas, an image signal with subtitles being supplied from a plurality of image processing devices each including one of the display areas assigned as a corresponding area to each display area so that an image display is performed, the image processing device including:
a subtitle information acquisition unit configured to acquire subtitle information; a subtitle processing unit configured to perform rendering of subtitles with a resolution of an entire image of a display panel on the basis of the subtitle information acquired by the subtitle information acquisition unit to generate a subtitle image of a corresponding area among a plurality of display areas divided in the display panel;
a corresponding image generation unit configured to generate an image signal of the corresponding area; and
a combination unit configured to combine the subtitle image generated by the subtitle processing unit with the image signal generated by the corresponding image generation unit to generate an image signal with subtitles.
